# EUROPÄISCHE PATENTSCHRIFT

(11) **EP 1 053 550 B1**
(45) Veröffentlichungstag und Bekanntmachung des Hinweises auf die Patenterteilung: **10.08.2005**
(21) Anmeldenummer: 99908742.2
(22) Anmeldetag: 19.01.1999
(51) Int. Cl.: G21C 15/18

(54) **DRUCKSPEICHER UND VERFAHREN ZUM BEREITSTELLEN EINES UNTER DRUCK STEHENDEN FLUIDS**
PRESSURE ACCUMULATOR AND METHOD FOR PROVIDING A PRESSURIZED FLUID
ACCUMULATEUR DE PRESSION ET PROCEDE DE MISE A DISPOSITION D'UN FLUIDE SOUS PRESSION

(30) Priorität: 03.02.1998 DE 19804215; 08.10.1998 DE 19846459
(43) Veröffentlichungstag der Anmeldung: 22.11.2000
(73) Patentinhaber: Framatome ANP GmbH, 91058 Erlangen (DE)
(72) Erfinder: MESETH, Johann, D-64807 Dieburg (DE); HARTEL, Werner, D-22393 Hamburg (DE)
(74) Vertreter: Tergau & Pohl Patentanwälte
(86) Internationale Anmeldenummer: PCT/DE1999/000123
(87) Internationale Veröffentlichungsnummer: WO 1999/040588

(56) Entgegenhaltungen:
- EP-A- 0 212 488
- DE-A- 1 764 470
- DE-A- 2 360 293
- YAMAGUCHI, K., YUASA, T., MAKIHARA, Y., OKABE, K., ICHIOKA, T.: "Development of an advanced boron injection tank" TRANSACTIONS OF THE AMERICAN NUCLEAR SOCIETY, Bd. 74, 1996, Seiten 258-259, XP002106459 USA in der Anmeldung erwähnt
- CINOTTI L ET AL: "THE INHERENTLY SAFE IMMERSED SYSTEM (ISIS) REACTOR" NUCLEAR ENGINEERING AND DESIGN, Bd. 143, Nr. 2/03, 1. September 1993, Seiten 295-300, XP000652482

## Beschreibung

Die Erfindung betrifft einen Druckspeicher für ein Fluid mit einem geschlossenen Behälter, der sich entlang einer Mittelachse von einem unteren zu einem oberen Bereich erstreckt, und mit einer Heizeinrichtung im oberen Bereich. Die Erfindung betrifft weiterhin ein Verfahren zum Bereitstellen eines unter Druck stehenden Fluids zum Weiterleiten an eine nachgeschaltete Komponente einer Anlage, beispielsweise einer Kernkraftanlage, bei dem das Fluid durch Wärmezufuhr im oberen Bereich des Druckspeichers erhitzt wird.

In kerntechnischen Anlagen werden Druckspeicher beispielsweise als sicherheitstechnische Einrichtungen verwendet. Sie dienen zur Bereitstellung eines unter Druck stehenden Fluids, das beispielsweise im Störfall an eine nachgeschaltete Komponente weitergeleitet werden kann. Die nachgeschaltete Komponente ist beispielsweise der Steuerstabantrieb eines Siedewasserreaktors oder der Reaktordruckbehälter einer Kernkraftanlage.

Aus der Broschüre der Kraftwerk Union (Siemens AG) "Druckwasserreaktor", Best. Nr. K/10567-01, August 1981 (DE), ist ein Druckspeicher für einen Druckwasserreaktor bekannt, der zur Kern-Notkühlung borhaltiges Wasser bereithält. Der Druck in dem Druckspeicher wird durch ein Stickstoffpolster bereitgestellt. Hierzu ist ein spezielles Stickstoff-Versorgungssystem erforderlich. Aufgabe des Druckspeichers ist es, eine bestimmte Menge eines Fluids jederzeit und über Jahre hinweg bereitzuhalten. Er ist ein passives Sicherheitsbauteil, das nur bei Bedarf aktiviert wird.

Nachteilig ist hierbei zum einen, daß das Stickstoffpolster ein großes Volumen, nämlich bis zu drei Viertel des Gesamtvolumens des Druckspeichers, beansprucht. Zum anderen kann sich der Stickstoff im Lauf der Zeit (in der Regel mehrere Jahre) teilweise im Wasser lösen. Im Störfall wird z.B. zur Notkühlung Wasser aus dem Druckspeicher zusammen mit dem darin gelösten Stickstoff in den Reaktor eingespeist. Mit dem Stickstoff wird also im Bedarfsfall ein nichtkondensierbares Gas in den Reaktor eingebracht, welches u.a. das Kondensationsverhalten von Dampf und damit die Wirkung von Kondensatoren oder Notkondensatoren beeinträchtigt.

Aus der oben genannten Broschüre ist weiterhin ein Druckhalter für einen Druckwasserreaktor bekannt, mit dem der Betriebsdruck des Kühlmittels im Reaktorkühlsystem auf einen gewünschten Wert eingestellt und gehalten wird. Er gleicht Temperatur- und Volumenänderungen des Kühlmittels aus, und ist daher ständig über eine Ausgleichsleitung mit dem Reaktorkühlsystem verbunden. Zur Regulierung des Betriebsdrucks weist er sowohl eine Heizeinrichtung als auch eine Kühleinrichtung auf. Die Heizeinrichtung ist im unteren Bereich des Druckhalters angeordnet und erwärmt das gesamte im Druckhalter befindliche Wasser.

Zur Vermeidung der mit dem Stickstoffpolster verbundenen Nachteile ist aus dem Artikel "Development of an advanced boron injection tank" von Kaori Yamaguchi et al., aus "Transactions of the American Nuclear Society", 1996, Band 74, Seiten 258 bis 259, ein als Bor-Einspeisetank ausgebildeter Druckspeicher bekannt. Dieser ist vollständig mit einer Borlösung gefüllt und weist in seinem oberen Bereich eine Heizeinrichtung zur Erwärmung der dort befindlichen Borlösung auf. Dabei wird im Druckspeicher ein Druck aufgebaut. Die Borlösung aus dem Druckspeicher wird bei Bedarf in ein Reaktorkühlsystem eingespeist. Dabei kommt es im Druckspeicher zunächst zu einer Druckabsenkung, die zu einem Verdampfen der im oberen Bereich befindlichen heißen Borlösung führt. Der Druck baut sich daher beim Ausströmen nur langsam ab.

Aufgrund der großen Temperaturunterschiede zwischen dem kalten Fluid im unteren Bereich und dem heißen Fluid im oberen Bereich kann es beim Ausströmen zu großen thermischen Belastungen des Druckspeichers kommen. In der Regel ist zudem ein aufwendiges Schließsystem vorgesehen, das ein vollständiges Entleeren des Druckspeichers verhindert. Damit wird gewährleistet, daß das heiße Fluid aus dem Druckspeicher nicht in die am Druckspeicher angeschlossene Rohrleitung gelangt. Das Schließsystem ist sehr aufwendig ausgestaltet, da es in kürzester Zeit die Rohrleitung absperren muß, und da es aufgrund der möglichen Druckunterschiede eine sehr hohe Schließkraft bereitstellen muß.

Es ist die Aufgabe der vorliegenden Erfindung, einen Druckspeicher sowie ein Verfahren zum Bereitstellen eines unter Druck stehenden Fluids anzugeben, bei denen eine hohe Betriebssicherheit gewährleistet ist, und die aufgeführten Nachteile der bekannten Druckspeicher behoben sind.

Die auf den Druckspeicher gerichtete Aufgabe wird erfindungsgemäß durch einen Druckspeicher der eingangs genannten Art gelöst, bei dem die Heizleistung seiner Heizeinrichtung derart bemessen ist, daß im oberen Bereich bereits im Standby-Betrieb Fluid verdampfbar ist, so daß im im oberen Bereich gebildeten Dampfraum ein vorgegebener Druck aufrechterhaltbar ist. Der Druck ist über die Heizleistung einstellbar.

Bei der Inbetriebnahme des Druckspeichers wird dieser nicht vollständig mit dem Fluid befüllt, so daß ein Dampfraum gebildet ist. Beim normalen Betrieb (Standby-Betrieb) wird ein Teil des Fluids durch die Heizeinrichtung verdampft. Dabei bildet sich ein Dampfpolster im Dampfraum aus. Das Fluid ist insbesondere Wasser oder borhaltiges Wasser. Ein Stickstoffpolster ist zum Druckaufbau nicht notwendig. Das Fluid im unteren Bereich bleibt kalt und wird im Bedarfsfall zur Ansteuerung einer nachgeschalteten Armatur herangezogen. Dabei gelangt das sogenannte Heißfluid aus dem oberen Bereich in den unteren Bereich. Das im unteren Bereich befindliche sogenannte Kaltfluid strömt aus dem Druckspeicher in eine an diesem angeschlossene Rohrleitung. Beim Ausströmen gelangt also zunächst nur Kaltfluid in die Rohrleitung, so daß diese vor thermischen Belastungen geschützt ist. Denn falls Heißfluid mit einer Temperatur nahe der Siedetemperatur in die Rohrleitung einströmt, würde diese eine schockartige thermische Beanspruchung erfahren. Ein Teil des Heißfluids würde beim Einströmen in die Rohrleitung verdampfen, so daß sich eine Zwei-Phasen Strömung ausbildet. Eine solche Zwei-Phasen Strömung ist jedoch strömungstechnisch schwerer zu handhaben als eine einfache Flüssigkeitsströmung.

Der Vorteil des Dampfpolsters liegt darin, daß der Betriebsdruck sehr einfach auf einen gewünschten Wert, beispielsweise auf den des Sättigungsdrucks des Wasserdampfs, eingestellt und auch gehalten werden kann. Da der Dampf kompressibel ist, führt eine geringe Temperaturerhöhung nicht zu einem überproportionalen Druckanstieg, wie er bei einem Druckspeicher zwangsläufig auftritt, der vollständig mit einer inkompressiblen Flüssigkeit gefüllt ist.

Ein weiterer Vorteil ist das geringe Volumen, das das Dampfpolster beansprucht. Es beträgt lediglich etwa ein Zehntel des Gesamtvolumens. Dadurch kann der Druckspeicher sehr kompakt und kostengünstig ausgeführt werden.

Bevorzugt ist ein Füllstandsmesser vorgesehen, mit dem die Füllstanshöhe des Fluids im Druckspeicher sowohl beim Befüllen als auch beim Standby-Betrieb überwacht wird, um ein geeignetes Volumen zur Ausbildung des Dampfpolsters bereitzuhalten.

In einer vorteilhaften Ausgestaltung ist im unteren Bereich an der Außenwand des Druckspeichers, insbesondere an deren Innenseite, zumindest teilweise eine Isoliereinrichtung vorgesehen ist.

Der wesentliche Vorteil der Isoliereinrichtung liegt darin, daß sie den direkten Kontakt zwischen dem Heißfluid und der kalten Außenwand vermeidet und somit deren thermische Beanspruchung gering hält. Die Isoliereinrichtung kann prinzipiell auch mit einem aus dem Stand der Technik bekannten Druckspeicher kombiniert werden, unabhängig davon, auf welche Weise der Druck erzeugt und aufrechterhalten wird.

In einer besonders bevorzugten Ausführungsform ist die Isoliereinrichtung zur Aufnahme eines Isoliermediums mit einem hohen Wärme-Speichervermögen ausgebildet, so daß das Heißfluid und der Dampf, wenn sie im unteren Bereich mit der Isoliereinrichtung in Kontakt kommen, einen Teil ihrer Wärme an das Isoliermedium abgeben.

Bei einer ausreichend großen Dimensionierung des Wärme-Speichervermögens ist damit der entscheidende Vorteil verbunden, daß auf das sehr aufwendige Schließsystem für die Rohrleitung verzichtet werden kann. Das Isoliermedium ist in der Lage, ausreichend Wärme aus dem Dampf aufzunehmen, so daß dieser kondensiert und der Druck im Druckspeicher automatisch abgebaut wird. Der Druck wird dabei im Druckspeicher bevorzugt soweit reduziert, daß er sich an den in der nachgeschalteten Komponente herrschenden Druck angleicht. Aufgrund eines fehlenden Druckunterschieds ist dann das Ausströmen von Heißfluid in die Rohrleitung und in die nachgeschaltete Komponente weitgehend ausgeschlossen. Zum Zwecke von Revisionsarbeiten kann eine Absperrung notwendig sein, die jedoch als einfacher Absperrschieber ausgebildet sein kann.

In einer besonders zweckmäßigen Ausgestaltung weist die Isoliereinrichtung eine Trennwand auf, durch die ein Außenraum zwischen der Außenwand des Behälters und der Trennwand gebildet ist. In den Außenraum kann das Isoliermedium eingebracht werden. Insbesondere ist das Isoliermedium das Fluid, mit dem der Druckspeicher befüllt wird. Es gelangt beim Befüllen bevorzugt automatisch in den Außenraum.

Zum automatischen Befüllen des Außenraums mit Fluid weist dieser bevorzugt an seinem oberen Ende eine Öffnung auf, über die er mit dem restlichen Innenraum in Verbindung steht, und bildet ansonsten einen abgeschlossenen Raum.

Anstatt des Fluids kann in den Außenraum auch ein anderes geeignetes Isoliermedium, beispielsweise eine gesonderte Flüssigkeit oder ein Feststoff mit einer besonders hohen Wärme-Speicherkapazität, eingebracht werden. Der Außenraum bildet gegebenenfalls einen vollständig geschlossenen Raum. Das Isoliermedium kann auch unmittelbar als Isoliereinrichtung an der Außenwand des Behälters befestigt sein.

Um eine ausreichende Druckabsenkung und damit ein Ausströmen von Heißfluid zu vermeiden, beträgt das Volumen des Außenraums etwa 15 bis 25%, und insbesondere etwa 18%, des Gesamtvolumens des Behälters. Das Volumen des oberen Bereichs weist bevorzugt etwa 10 bis 30%, und insbesondere 18%, des Gesamtvolumens auf. Dies ist zu Erzeugung und Aufrechterhaltung des notwendigen Drucks ausreichend. Gleichzeitig wird mit diesem Volumenanteil sichergestellt, daß beim Ausströmen der Druck im Druckspeicher zunächst nur leicht abfällt, um eine ausreichende Menge an Fluid der nachgeschalteten Komponente zuführen zu können. Erst wenn die für die Komponente vorgesehene Fluidmenge den Druckspeicher verlassen hat, wird der Druck durch die Kondensation des Dampfs abgebaut.

Zur Ausbildung der Temperaturverteilung ist es von Vorteil, die Heizeinrichtung im wesentlichen in einer Ebene anzuordnen, die senkrecht zur Mittelachse ausgerichtet ist, wodurch eine gleichmäßige und großflächige Aufheizung im oberen Bereich erzielt ist. Die Heizeinrichtung ist bevorzugt elektrisch beheizbar.

In einer bevorzugten Ausführungsform ist der Druckspeicher für einen Betriebsdruck über 50 bar, und insbesondere für einen Betriebsdruck von 150 bar, ausgelegt. Dies ist für den Einsatz bei Anlagen der Energieerzeugung günstig.

Um die erforderliche Heizenergie möglichst gering zu halten, ist der Druckspeicher zumindest im oberen Bereich nach außen thermisch isoliert. Auf diese Weise sind die thermischen Verluste gering.

Die auf das Verfahren bezogene Aufgabe wird erfindungsgemäß durch ein Verfahren der eingangs genannten Art gelöst, bei dem während des Standby-Betriebs das Fluid im nur teilweise gefüllten Druckspeicher zur Erzeugung und Aufrechterhaltung des Drucks teilweise erhitzt und verdampft wird, so daß ein Dampfpolster erzeugt wird.

Bei Bedarf, beispielsweise bei einem Kühlmittelverlust-Störfall in einer kerntechnischen Anlage, wird das Fluid aus dem Druckspeicher zu Kühlzwecken in den Reaktordruckbehälter der Anlage eingeleitet. Das Fluid kann aber auch als Antriebsfluid zum Einschießen von Steuerstäben in den Reaktordruckbehälter eines Siedewasserreaktors vorgesehen sein. Wie bereits erwähnt, ist bei Vorhandensein eines Dampfpolsters die Einstellung und Aufrechterhaltung des gewünschten Druckwerts im Vergleich zu einem vollständig mit Flüssigkeit gefüllten Druckspeicher wesentlich einfacher.

Um zu gewährleisten, daß die nachgeschaltete Komponente mit einer ausreichenden Menge an Fluid versorgt wird, und daß der Druck im Druckspeicher nicht vorzeitig absinkt, entspricht im Standby-Betrieb die Menge an Heißfluid bevorzugt in etwa der von der nachgeschalteten Komponente benötigten Fluidmenge. Dies führt dazu, daß durch das Ansteuern der Komponente das Fluidvolumen im Druckspeicher zunächst lediglich um die Menge des Heißfluidvolumens reduziert wird. Dadurch wird sichergestellt, daß der im oberen Bereich befindliche Dampf anfangs nur mit der von dem Heißfluid erwärmten Außenwand in Kontakt kommt und nicht kondensiert.

Bevorzugt wird dem Fluid ein nichtkondensierbares Gas zugemischt. Dadurch wird die Temperaturbelastung für die Rohrleitung reduziert, da die nichtkondensierbaren Gase sich an den kalten Wänden anreichern und dort den Wärmeübergang zwischen dem heißen Fluid und der Rohrwand wesentlich verlangsamen. Sie bilden quasi eine Isolierschicht. Die nichtkondensierbaren Gase sollten jedoch nur zu einem geringen Anteil dem Fluid beigemischt werden, so daß der Partialdruck der nichtkondensierbaren Gase im Druckspeicher in etwa 2 bar nicht übersteigt. Bei einem zu hohen Anteil von nichtkondensierbaren Gasen würde die Wirkungsweise von Kondensatoren bzw. Notkondensatoren beeinträchtigt werden.

Weitere vorteilhafte Ausgestaltungen des Verfahrens sind den Ansprüchen zu entnehmen. Die bezüglich des Druckspeichers angegebenen Vorteile gelten sinngemäß auch für das Verfahren.

Bevorzugt werden die Steuerstäbe eines Reaktors einer Siedewasser-Kernkraftanlage mittels des unter Druck stehenden Fluids aus dem Druckspeicher angesteuert. Der Druckspeicher wird also bevorzugt als sogenannter Schnellabschalttank einer Siedewasser-Kernkraftanlage verwendet.

Alternativ wird das Fluid in einer zweckdienlichen Weise einem Notkühlsystem einer Druckwasser-Kernkraftanlage als Notkühlwasser zugeführt. Der Druckspeicher wird demnach bevorzugt als sogenannter Akkumulator für das Notkühlwasser bei einer Druckwasser-Kernkraftanlage verwendet.

Im folgenden wird ein Ausführungsbeispiel der Erfindung sowie weitere Vorteile und Details anhand der Zeichnung näher erläutert. Es zeigen jeweils in schematischer Darstellung:
- FIG 1-3: einen Druckspeicher im Längsschnitt in verschiedenen Betriebszuständen
- FIG 4: einen Ausschnitt aus einer Siedewasser-Kernkraftanlage, mit einem Druckspeicher als Schnellabschalttank und
- FIG 5: einen Ausschnitt aus einer Druckwasser-Kernkraftanlage, mit einem Druckspeicher als Akkumulator für Notkühlwasser.

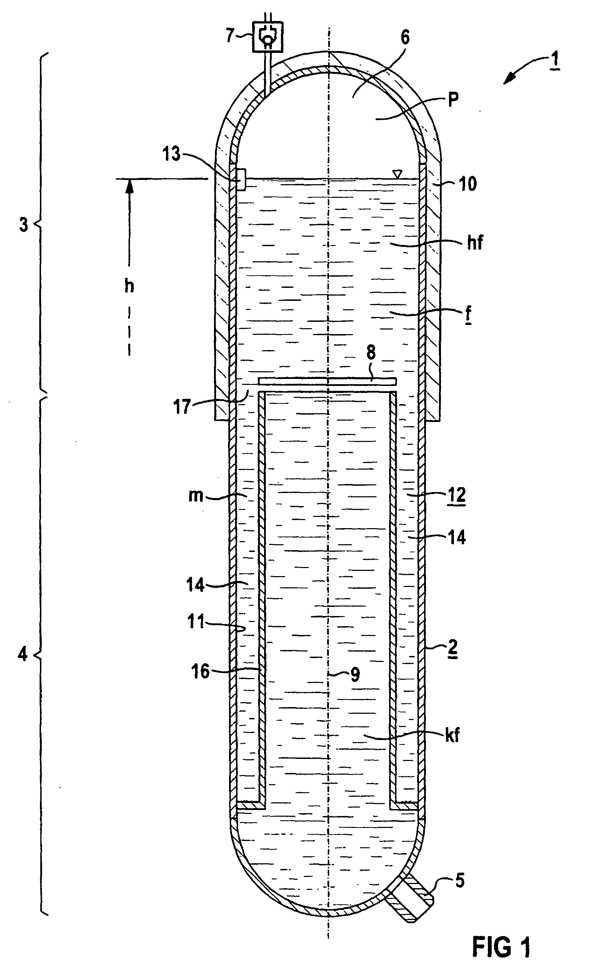

Gemäß Figur 1 umfaßt ein Druckspeicher 1 einen geschlossenen und aufrechtstehenden Behälter 2 mit einem oberen Bereich 3 und einem unteren Bereich 4, der etwa 2/3 des Behältervolumens umfaßt. Der Behälter 2 ist mit einem Fluid f bis zu einer Füllstandshöhe h befüllt. Zur genauen Einstellung der Füllstandshöhe h beim Befüllen des Druckspeichers 1 mit Fluid f und zum Überwachen der Füllstandshöhe h während dem Standby-Betrieb ist ein Füllstandsmesser 13 vorgesehen. Gemäß Figur 1 ist er als ein Sensor ausgebildet, der mißt, ob die gewünschte Füllstandshöhe h eingehalten wird. Der Füllstandsmesser 13 kann alternativ auch beispielsweise nach Art einer kommunizierenden Röhre als Steigleitung ausgebildet sein, die mit dem Druckspeicher 1 in Verbindung steht. Damit ist eine Ermittlung der Füllstandshöhe h über den gesamten Füllbereich möglich.

Das Fluid f ist beispielsweise Wasser oder auch borhaltiges Wasser. Der Behälter 2 besitzt an seinem unteren Ende einen Auslaß 5. Dieser kann bei Bedarf, beispielsweise vor Inbetriebnahme oder nach einer Abgabe des Fluids f aus dem Druckspeicher 1, auch als Befüllöffnung verwendet werden, über die das Fluid f in den Druckspeicher 1 eingebracht wird. Im normalen Betriebszustand des Druckspeichers 1 (Standby-Betrieb) ist der Auslaß 5 durch ein nicht näher dargestelltes Ventil verschlossen

Oberhalb der Füllstandshöhe h ist zur Aufnahme von Dampf ein Dampfraum 6 gebildet. Er ist beim Befüllen des Behälters (2) mit kaltem Wasser beispielsweise noch mit Luft oder Stickstoff bei Atmosphärendruck gefüllt und wird zumindest nach Beendigung des Füllvorgangs zur Umgebung hin durch Schließen eines Ventils 7 verschlossen. Dadurch wird erreicht, daß der Partialdruck von nichtkondensierbaren Gasen, wie Stickstoff, im Betriebszustand 2 bar nicht überschreitet. Das Fluid f nimmt bevorzugt einen Großteil des Behältervolumens ein, wohingegen der Dampfraum 6 lediglich ein geringes Volumen, beispielsweise etwa ein Zehntel des Gesamtvolumens des Behälters 2, beansprucht.

Der Dampfraum 6 steht über das Ventil 7 mit der Umgebung in Verbindung, so daß Dampf abgeblasen und der Druck im Druckspeicher 1 verringert werden kann. Üblicherweise werden Druckspeicher in einer Kernkraftanlage beim Anfahren der Kernkraftanlage auf einen maximalen Druck eingestellt, der nicht zwangsläufig dem normalen Betriebsdruck entspricht. Der Druck im Druckspeicher 1 kann während des Anfahrens der Kernkraftanlage leicht durch Wahl einer geeigneten Heizleistung einer Heizeinrichtung 8 bzw. durch Abblasen des Dampfes verändert werden.

Der Füllstandsmesser 13 kann alternativ auch beispielsweise nach Art einer kommunizierenden Röhre als Steigleitung ausgebildet sein, die mit dem Druckspeicher 1 in Verbindung steht. Damit ist eine Ermittlung der Füllstandshöhe über den gesamten Füllbereich möglich.

Die Heizeinrichtung 8 ist im oberen Bereich 3 vorgesehen. Sie kann prinzipiell innerhalb oder außerhalb des Druckspeichers angeordnet sein. Bei einer außerhalb angeordneten Heizeinrichtung wird dem Fluid f beispielsweise durch elektromagnetische Strahlung oder durch Strahlungswärme Energie zugeführt. Bei einer außerhalb angeordneten Heizeinrichtung brauchen keine Versorgungsleitungen in den Druckspeicher zu führen. Bevorzugt ist die Heizeinrichtung 8 derart ausgestaltet, daß kein Stoffaustausch mit dem Fluid f stattfindet und die Menge des Fluids f in dem Druckspeicher 1 konstant bleibt.

Im Ausführungsbeispiel der Figur 1 ist die Heizeinrichtung 8 im Inneren des Behälters 2 und insbesondere in einer Ebene angeordnet, die sich senkrecht zur Mittelachse 9 erstreckt. Die Heizeinrichtung 8 ist also waagrecht und im wesentlichen parallel zur Oberfläche des Fluids f angeordnet und wird beispielsweise aus elektrisch beheizbaren Heizstäben gebildet. Sie ist bevorzugt derart ausgebildet, daß sie nur nach oben Wärme abgibt. Alternativ kann die Heizeinrichtung 8 auch von einem Wärmetauscher gebildet sein, der beispielsweise von heißem Dampf durchströmbare Heizrohre umfaßt.

Der Behälter 2 ist an seinem oberen Bereich 3, in dem die Heizeinrichtung 8 sowie der Dampfraum 6 angeordnet sind, nach außen durch einen Isoliermantel 10 thermisch isoliert. Der Isoliermantel 10 ist nicht zwingend auf den oberen Bereich 3 beschränkt.

Im unteren Bereich 4 ist an der Innenseite 11 der Außenwand des Behälters 2 eine Isoliereinrichtung 12 vorgesehen. Sie ist im wesentlichen durch eine Trennwand 16 gebildet, die von der Außenwand des Behälters 2 beabstandet ist und mit dieser einen Außenraum 14 bildet. Die Trennwand 16 ist an ihrem unteren Ende mit der Wand des Behälters 2 verbunden, so daß der Außenraum 14 nach unten verschlossen ist. An seinem oberen Ende ist der Außenraum 14 offen und steht über eine Öffnung 17 mit dem Fluid f strömungstechnisch in Verbindung, so daß der Außenraum 14 beim Betrieb des Druckspeichers 1 mit Fluid f angefüllt ist, welches als Isoliermedium m wirkt. Die Trennwand 16 kann als eine ringförmige und nach oben hin offene Schürze aufgefaßt werden. Mit der Isoliereinrichtung 12 wird die Innenseite 11 vor thermischen Belastungen geschützt. Die Isoliereinrichtung 12 kann prinzipiell auch für den gesamten Behälter 2 vorgesehen sein.

Der Druck im Druckspeicher 1 wird aufgebaut, indem die Heizeinrichtung 8 das Fluid f im oberen Bereich 3 erhitzt und teilweise verdampft. Im oberen Bereich 3 liegt das Fluid f als Heißfluid hf vor, und im Dampfraum 6 bildet sich ein Dampfpolster p aus. Im unteren Bereich 4 liegt das Fluid f als Kaltfluid kf vor, wobei der Übergang zum Heißfluid hf fließend ist. In Richtung der Mittelachse 9 nimmt die Temperatur nach unten ab, und es bildet sich ein stationäres Temperaturprofil aus.

Der gewünschte Betriebsdruck im Druckspeicher 1 wird bevorzugt als Sättigungsdruck des Heißfluids hf eingestellt. Das Heißfluid hf ist insbesondere Sattwasser. Der Sättigungsdruck wird über die Zufuhr von Wärmeenergie durch die Heizeinrichtung 8 reguliert. Ist der Betriebsdruck erreicht, so müssen lediglich die Wärmeverluste, beispielsweise durch Strahlungswärme, durch eine geeignete Wärmezufuhr ausgeglichen werden. Die Wärmeverluste werden durch den Isoliermantel 10 gering gehalten. Zur Einstellung des Drucks können nicht näher gezeigte Meß- und Steuereinrichtungen vorgesehen sein.

Figur 1 zeigt den normalen Betriebszustand des Druckspeichers 1, bei dem das Fluid auf einem gewünschten Betriebsdruck, beispielsweise 130 bar, gehalten wird.

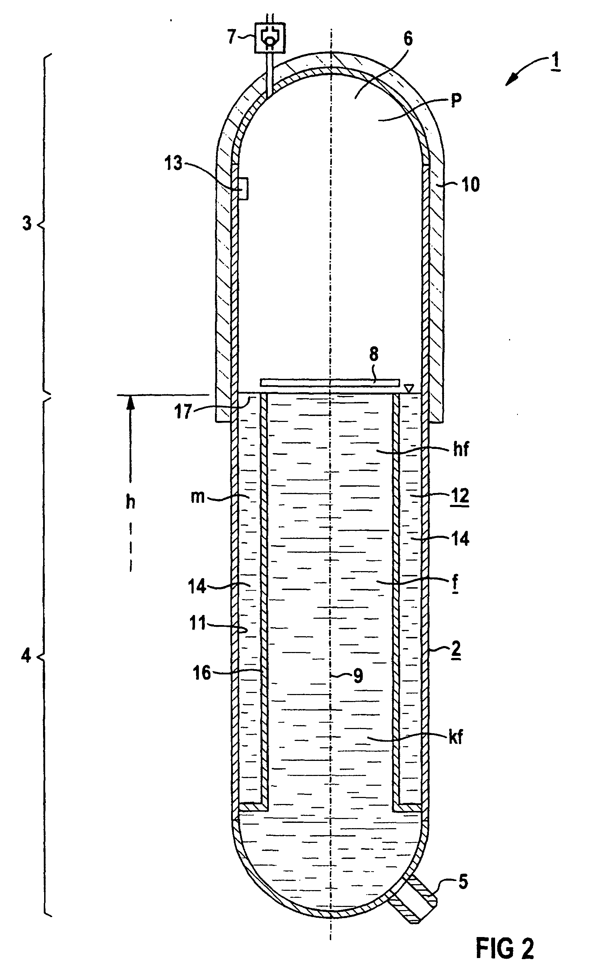

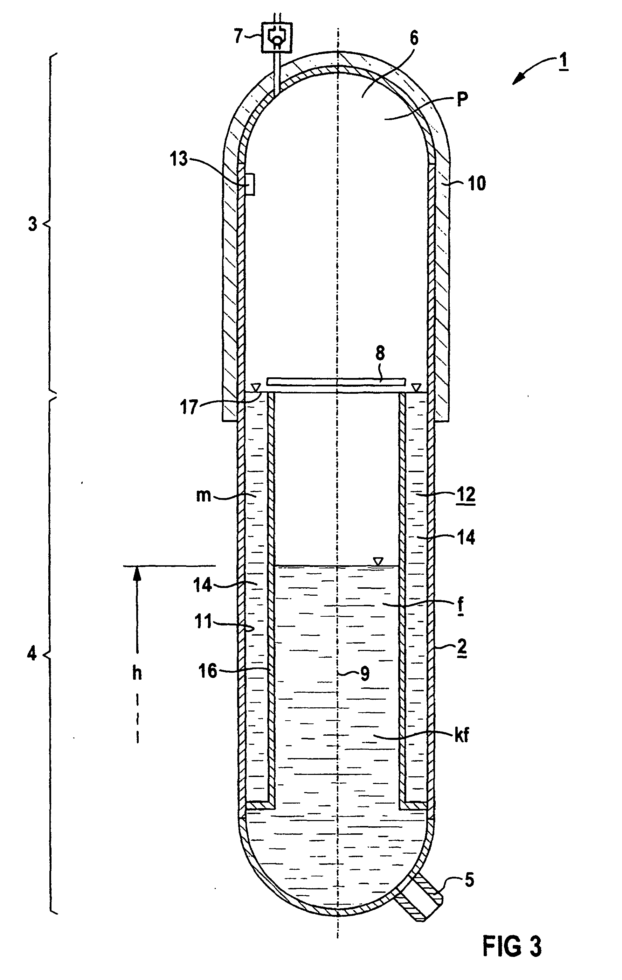

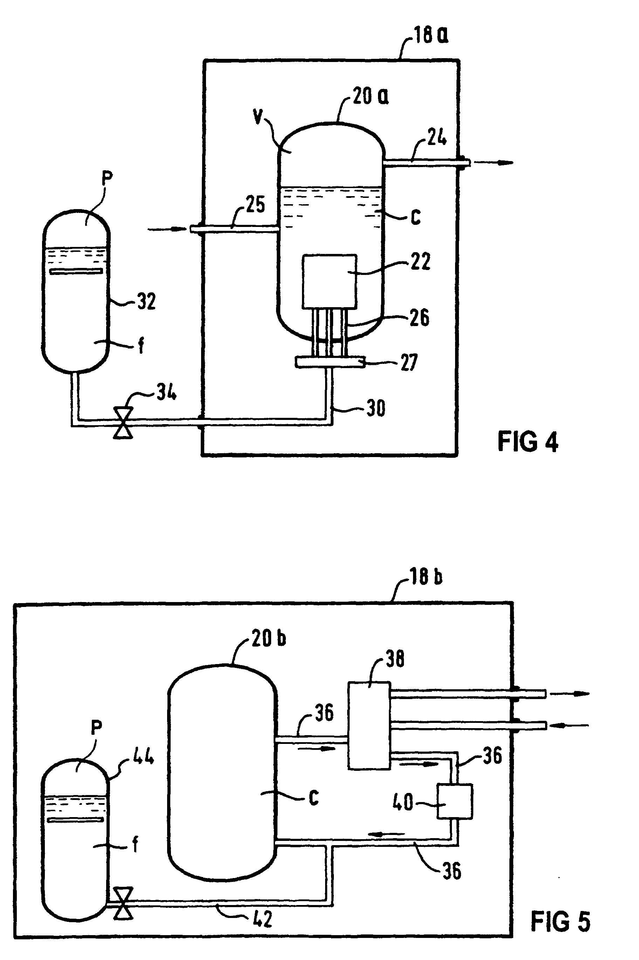

Die Figuren 2 und 3 zeigen Betriebszustände, wenn im Bedarfsfall Fluid f, insbesondere Kaltfluid kf, bereits aus dem Druckspeicher 1 ausgeströmt ist und zu einer nachgeschalteten Komponente weitergeleitet wurde. Die nachgeschaltete Komponente ist beispielsweise ein Steuerstabantrieb 27 eines Siedewasserreaktors (vergl. hierzu Figur 4).

Die Gesamtmenge des Fluids f ist so bemessen, daß nur ein Teil davon für die nachgeschaltete Komponente benötigt wird, um ein Leerlaufen des Druckspeichers 1 zu verhindern. Durch das Ausströmen des Fluids f reduziert sich der Druck im Druckspeicher 1, so daß zusätzliches Heißfluid hf verdampft wird. Dieser Effekt verhindert eine allzu rasche Druckabsenkung.

Zudem entspricht das benötigte Volumen, beispielsweise zum Einfahren der Steuerstäbe 26, bevorzugt in etwa dem Volumen des Heißfluids hf. Nach Einfahren der Steuerstäbe 26, wenn also für den Steuerstabantrieb 27 kein weiteres Fluid f mehr benötigt wird, hat sich die Füllstandshöhe h lediglich bis zum oberen Ende der Isoliereinrichtung 12 abgesenkt. Das Dampfpolster p kommt also nur in Kontakt mit dem Bereich der Außenwand, die zuvor von dem Heißfluid hf erhitzt wurde. Dadurch wird vermieden, daß der Dampf an kalten Wänden kondensiert und es zu einer unerwünschten vorzeitigen Druckabsenkung kommt. Der Druck reduziert sich beispielsweise lediglich von 130 bar auf 100 bar. Dies stellt einen ausreichenden Überdruck dar, um das Einschießen der Steuerstäbe sicher bis zum Ende durchführen zu können (Figur 2).

Nach dem Einschießen der Steuerstäbe 26 strömt aufgrund des zunächst weiterhin bestehenden Druckunterschieds Fluid f über Leckageöffnungen an den Steuerstäben 26 vorbei in einen Reaktordruckbehälter 20a. Der Füllstand h im Druckspeicher 1 sinkt daher im Innenraum des Druckspeichers 1 weiter ab, wie es in Figur 3 dargestellt ist. Der von der Trennwand 16 gebildete Außenraum 14 bleibt demgegenüber mit dem Fluid f als Isoliermedium m gefüllt. Das Dampfpolster p kommt in Kontakt mit der von dem Isoliermedium m gekühlten Trennwand 16 und kondensiert an ihr aus, so daß der Druck im Druckspeicher absinkt. Die Menge des Isoliermediums m ist so bemessen, daß genügend Dampf auskondensiert werden kann. Damit wird eine ausreichende Druckabsenkung erzielt, so daß ein weiteres Ausströmen von Fluid aus dem Druckspeicher 1 vermieden wird. Insbesondere ist ein Ausströmen von Heißfluid hf vermieden.

Das Volumen des Außenraums 14 beträgt hierzu beispielsweise etwa 20% des Gesamtvolumens des Druckbehälters 1. Gleichzeitig ist die Heizeinrichtung 8 derart angeordnet, und ihre Heizleistung derart bemessen, daß das Volumen des Heißfluids hf und das Volumen des Dampfpolsters p im normalen Betriebszustand zusammen etwa ebenfalls 20% des Gesamtvolumens des Druckspeichers 1 einnehmen, wobei das Heißfluid hf doppelt soviel Volumen in Anspruch nimmt wie das Dampfpolster p. Im vorliegenden Beispiel beträgt der Druck im Betriebszustand nach Figur 3 beispielsweise nur noch etwa 70 bar und entspricht damit dem Druck im Reaktordruckbehälter 20a, so daß kein weiteres Fluid f aus dem Druckspeicher 1 ausströmt. Der Druckspeicher 1 sollte so dimensioniert sein, daß der Druck in ihm beispielsweise auch bis auf etwa 20 bar automatisch abgesenkt werden kann. Dies ist für den Fall wichtig, wenn sich der Druck im Reaktordruckbehälter 20a beispielsweise aufgrund eines Kühlmittelverlust-Störfalls absenkt.
Die angegebenen Volumenverhältnisse sind für das Ausführungsbeispiel der Schnellabschaltung eines Siedewasserreaktors besonders vorteilhaft. Für andere Anwendungsfälle können Volumenverhältnisse günstiger sein, die von den oben genannten abweichen.

Figur 4 zeigt einen schematischen Ausschnitt aus einer Siedewasser-Kernkraftanlage. In einem Sicherheitsbehälter 18a ist der erwähnte Reaktordruckbehälter 20a mit einem Kernbereich 22 angeordnet. Der Reaktordruckbehälter 20a ist zum Teil mit einer Kühlflüssigkeit c angefüllt. Oberhalb der Kühlflüssigkeit c befindet sich Dampf v, der über eine Dampfleitung 24 aus dem Sicherheitsbehälter 18a herausgeführt und zu einer nicht näher dargestellten Turbine geleitet wird. Abgekühlte Kühlflüssigkeit c wird dem Reaktordruckbehälter 20a über eine Leitung 25 für die Kühlflüssigkeit c wieder zugeführt. Die Leistung des Kernreaktors kann durch Einfahren bzw. Ausfahren der Steuerstäbe 26 in den Kernbereich 22 geregelt werden. Die Steuerstäbe 26 werden durch den bereits erwähnten Steuerstabantrieb 27 bewegt.

Der Steuerstabantrieb 27 ist über eine Steuerleitung 30 mit einem beispielsweise außerhalb des Sicherheitsbehälters 18a angeordneten Schnellabschalttank 32 verbunden. Der Schnellabschalttank 32 entspricht weitgehend dem zu den Figuren 1 bis 3 beschriebenen Druckspeicher 1. Es können für die Schnellabschaltung auch mehrere Schnellabschalttanks 32 vorgesehen sein.

Sofern aufgrund einer wesentlichen Betriebsstörung der Kernkraftanlage ein Schnellabschalten des Reaktors erforderlich ist, wird ein Ventil 34 geöffnet. Das im Schnellabschalttank 32 befindliche und unter Druck stehende Fluid f wirkt über die Steuerleitung 30 auf den Steuerstabantrieb 27 ein, so daß die Steuerstäbe 26 in den Kernbereich 22 eingefahren werden. In solch einem Störfall ist es wichtig, daß über die Steuerleitung 30 möglichst wenig nichtkondensierbare Gase in den Reaktordruckbehälter 20a gelangen. Mit zunehmendem Anteil an nichtkondensierbaren Gasen im Reaktordruckbehälter 20a wird nämlich die Kondensationsfähigkeit an dem eingespeisten, kalten Notkühlwasser vermindert.

Figur 5 zeigt einen schematischen Ausschnitt aus einer Druckwasser-Kernkraftanlage. In einem Sicherheitsbehälter 18b ist ein Reaktordruckbehälter 20b angeordnet. Die im Reaktordruckbehälter 20b erhitzte Kühlflüssigkeit c wird in einem Primärkreislauf 36 geführt. Sie verläßt den Reaktordruckbehälter 20b und wird einem Dampferzeuger 38 zugeführt, dort abgekühlt und anschließend über eine Kühlmittelumwälzpumpe 40 dem Reaktordruckbehälter 20b wieder zugeführt.

Am Primärkreislauf 36 ist eine Notkühlleitung 42 angeschlossen, die mit einem Notakkumulator 44 verbunden ist. Der Notakkumulator 44 entspricht weitgehend dem Druckspeicher 1 gemäß der Figuren 1 bis 3. Im Notakkumulator 44 befindet sich beispielsweise borhaltiges Wasser als Fluid f. Bei einem Kühlmittel-Verlust-Störfall kann das unter Druck stehende Fluid f über die Notkühlleitung 42 direkt in den Primärkreislauf 36 und somit in den Reaktordruckbehälter 20b eingespeist werden.

Der neue Druckspeicher 1 und das zugehörige Verfahren erlauben bevorzugt in Kraftwerksbereichen, und insbesondere bei Störfällen, eine zuverlässige Versorgung eines Anlagenteils mit einem Fluid f, wobei nur ein geringer Aufwand und der Einsatz von einfachen Mitteln notwendig ist.

## Patentansprüche

1. Druckspeicher (1) für ein Fluid (f) mit einem geschlossenen Behälter (2), der sich entlang einer Mittelachse (9) von einem unteren Bereich (4) zu einem oberen Bereich (3) erstreckt, und mit einer Heizeinrichtung (8) im oberen Bereich (3), **dadurch gekennzeichnet, daß** die Heizleistung der Heizeinrichtung (8) derart bemessen ist, daß im oberen Bereich (3) bereits im Standby-Betrieb Fluid (f) verdampfbar ist, so daß im dort gebildeten Dampfraum (6) ein vorgegebener Druck aufrechterhaltbar ist.

2. Druckspeicher (1) nach Anspruch 1,
**dadurch gekennzeichnet, daß** ein Füllstandsmesser (13) zur Überwachung der Füllstandshöhe (h) des Fluids (f) im Behälter (2) vorgesehen ist.

3. Druckspeicher nach Anspruch 1 oder 2,
**dadurch gekennzeichnet, daß** im unteren Bereich (4) an der Außenwand des Behälters (2), insbesondere an deren Innenseite (11), zumindest teilweise eine Isoliereinrichtung (12) vorgesehen ist.

4. Druckspeicher (1) nach Anspruch 3,
**dadurch gekennzeichnet, daß** die Isoliereinrichtung (12) zur Aufnahme eines Isoliermediums (m) ausgebildet ist, welches als Wärmespeicher dient.

5. Druckspeicher (1) nach Anspruch 3 oder 4,
**dadurch gekennzeichnet, daß** die Isoliereinrichtung (12) eine Trennwand (16) aufweist, die im unteren Bereich (4) des Behälters (2) angeordnet ist, und durch die ein Außenraum (14) zwischen der Außenwand und der Trennwand (16) gebildet ist.

6. Druckspeicher (1) nach Anspruch 5,
**dadurch gekennzeichnet, daß** der Außenraum (14) mit dem restlichen Innenraum des Behälters (2) über eine Öffnung (17) an seinem oberen Ende in Verbindung steht.

7. Druckspeicher (1) nach Anspruch 5 oder 6,
**dadurch gekennzeichnet, daß** das Volumen des Außenraums (14) etwa 15% - 25% und insbesondere 18% des Gesamtvolumens des Behälters (2) beträgt.

8. Druckspeicher (1) nach einem der vorhergehenden Ansprüche,
**dadurch gekennzeichnet, daß** das Volumen des oberen Bereichs (3) etwa 10% - 30% und insbesondere 18% des Gesamtvolumens des Behälters (2) beträgt.

9. Druckspeicher (1) nach einem der vorhergehenden Ansprüche,
**dadurch gekennzeichnet, daß** die Heizeinrichtung (8) im wesentlichen in einer Ebene angeordnet ist, die senkrecht zur Mittelachse (3) ausgerichtet ist.

10. Druckspeicher (1) nach einem der vorhergehenden Ansprüche, **dadurch gekennzeichnet, daß** er für einen Betriebsdruck von über 50 bar, insbesondere für einen Betriebsdruck von 150 bar, ausgelegt ist.

11. Verfahren zum Bereitstellen eines in einem Druckspeicher (1) unter Druck stehenden Fluids (f) zum Weiterleiten an eine nachgeschaltete Komponente (27, 20b) einer Anlage, bei dem das Fluid (f) durch Wärmezufuhr im oberen Bereich (3) des Druckspeichers (1) erhitzt wird,
**dadurch gekennzeichnet, daß** während des Standby-Betriebs das Fluid (f) im nur teilweise gefüllten Druckspeicher (1) zur Erzeugung und Aufrechterhaltung des Drucks teilweise verdampft und ein Dampfpolster (p) erzeugt wird.

12. Verfahren nach Anspruch 11,
**dadurch gekennzeichnet, daß** die Wärmezufuhr so bemessen ist, daß sich an das Dampfpolster (p) ein Heißfluidbereich mit Heißfluid (hf) und an diesen wiederum ein Kaltfluidbereich mit Kaltfluid (kf) anschließt, wobei das Volumen des Heißfluidbereichs zu dem des Dampfpolsters (p) ein Verhältnis von etwa 2:1 aufweist, und die beiden Volumen etwa 10% - 30% und insbesondere 18% des Volumens des Druckspeichers (1) bilden.

13. Verfahren nach Anspruch 11 oder 12,
**dadurch gekennzeichnet, daß** die Menge an Heißfluid (hf) in etwa der von der nachgeschalteten Komponente (27, 20b) benötigten Fluidmenge entspricht.

14. Verfahren nach einem der Ansprüche 11 bis 13,
**dadurch gekennzeichnet, daß** beim Weiterleiten des Fluids (f) die Füllstandshöhe (h) im Druckspeicher (1) abgesenkt wird, und daß das Heißfluid (hf) und der Dampf des Dampfpolsters (p) im unteren Bereich (4) durch Wärmeabgabe an eine Isoliereinrichtung (12) abgekühlt werden, wodurch der Druck im Druckspeicher (1) abgebaut wird.

15. Verfahren nach einem der Ansprüche 11 bis 14,
**dadurch gekennzeichnet, daß** dem Fluid (f) ein nichtkondensierbares Gas zugemischt wird.

16. Verfahren nach einem der Ansprüche 11 bis 15,
**dadurch gekennzeichnet, daß** das Fluid (f) an den Steuerstabantrieb (27) eines Reaktors einer Siedewasser-Kernkraftanlage weitergeleitet wird.

17. Verfahren nach einem der Ansprüche 11 bis 15,
**dadurch gekennzeichnet, daß** das Fluid (f) an ein Notkühlsystem einer Druckwasser-Kernkraftanlage als Notkühlwasser weitergeleitet wird.

18. Verwendung des Druckspeichers (1) nach einem der Ansprüche 1 bis 10 als Schnellabschalttank (32) einer Siedewasser-Kernkraftanlage.

19. Verwendung des Druckspeichers (1) nach einem der Ansprüche 1 bis 10 als Akkumulator (44) für das Notkühlwasser bei einer Druckwasser-Kernkraftanlage.

## Claims

1. Pressure accumulator (1) for a fluid (f), having a closed vessel (2), which extends along a centre axis (9) from a lower region (4) to an upper region (3), and having a heater device (8) in the upper region (3), **characterized in that** the heating capacity of the heater device (8) is such that in the upper region (3) fluid (f) can be evaporated even in standby mode, so that a predetermined pressure can be maintained in the vapour chamber (6) formed **in that** region.

2. Pressure accumulator (1) according to Claim 1, **characterized in that** a level meter (13) is provided for monitoring the filling level (h) of the fluid (f) in the vessel (2).

3. Pressure accumulator according to Claim 1 or 2, **characterized in that** in the lower region (4) an insulating device (12) is provided on at least parts of the outer wall of the vessel (2), in particular on the inner side (11) thereof.

4. Pressure accumulator (1) according to Claim 3, **characterized in that** the insulating device (12) is designed to hold an insulating medium (m) which serves as a heat accumulator.

5. Pressure accumulator (1) according to Claim 3 or 4, **characterized in that** the insulating device (12) has a partition (16) which is arranged in the lower region (4) of the vessel (2) and by means of which an outer chamber (14) is formed between the outer wall and the partition (16).

6. Pressure accumulator (1) according to Claim 5, **characterized in that** the outer chamber (14) is in communication with the remaining inner chamber of the vessel (2) via an opening (17) at its top end.

7. Pressure accumulator (1) according to Claim 5 or 6, **characterized in that** the volume of the outer chamber (14) amounts to approximately 15% - 25%, and in particular 18%, of the total volume of the vessel (2).

8. Pressure accumulator (1) according to one of the preceding claims, **characterized in that** the volume of the upper region (3) amounts to approximately 10% - 30%, and in particular 18%, of the total volume of the vessel (2).

9. Pressure accumulator (1) according to one of the preceding claims, **characterized in that** the heater device (8) is arranged substantially in a plane which is oriented perpendicular to the centre axis (9).

10. Pressure accumulator (1) according to one of the preceding claims, **characterized in that** it is designed for an operating pressure of over 50 bar, in particular for an operating pressure of 150 bar.

11. Method for providing a pressurized fluid (f) in a pressure accumulator (1) for passing onto a downstream component (27, 20b) of a plant, in which the fluid (f) is heated as a result of heat being supplied in the upper region (3) of the pressure accumulator (1), **characterized in that** during standby mode, some of the fluid (f) is evaporated in the only partially filled pressure accumulator (1), in order to generate and maintain the pressure, and a vapour cushion (p) is generated.

12. Method according to Claim 11, **characterized in that** the supply of heat is such that the vapour cushion (p) is followed by a hot-fluid region containing hot fluid (hf), and this region is in turn followed by a cold-fluid region containing cold fluid (kf), the ratio of the volume of the hot-fluid region to that of the vapour cushion (p) being approximately 2:1, and the two volumes forming approximately 10% - 30%, and in particular 18%, of the volume of the pressure accumulator (1).

13. Method according to Claim 11 or 12, **characterized in that** the amount of hot fluid (hf) approximately corresponds to the amount of fluid required by the downstream component (27, 20b).

14. Method according to one of Claims 11 to 13, **characterized in that** when the fluid (f) is passed on the filling level (h) in the pressure accumulator (1) is lowered, and **in that** the hot fluid (hf) and the vapour of the vapour cushion (p) are cooled in the lower region (4) by releasing heat to an insulating device (12), with the result that the pressure in the pressure accumulator (1) is reduced.

15. Method according to one of Claims 11 to 14, **characterized in that** a noncondensable gas is admixed with the fluid (f).

16. Method according to one of Claims 11 to 15, **characterized in that** the fluid (f) is passed onto the control rod drive (27) of a reactor of a boiling-water nuclear power plant.

17. Method according to one of Claims 11 to 15,
**characterized in that** the fluid (f) is passed on as emergency cooling water to an emergency cooling system of a pressurized-water nuclear power plant.

18. Use of the pressure accumulator (1) according to one of Claims 1 to 10 as an emergency shut-down tank (32) of a boiling-water nuclear power plant.

19. Use of the pressure accumulator (1) according to one of Claims 1 to 10 as an accumulator (44) for the emergency cooling water in a pressurized-water nuclear power plant.

## Revendications

1. Accumulateur (1) de pression pour un fluide (f) comprenant une cuve (2) fermée qui s'étend le long d'un axe (9) médian d'une partie (4) inférieure à une partie (3) supérieure et un dispositif (8) de chauffage dans la partie (3) supérieure, **caractérisé en ce que** la puissance de chauffage du dispositif (8) de chauffage est telle que dans la partie (3) supérieure du fluide (f) peut s'évaporer déjà en fonctionnement en réserve de manière à pouvoir maintenir une pression prescrite dans l'espace (6) pour la vapeur qui y est formé.

2. Accumulateur (1) de pression suivant la revendication 1, **caractérisé en ce qu'**il est prévu un dispositif (13) de mesure de niveau pour surveiller le niveau (h) de remplissage du fluide (f) dans la cuve (2).

3. Accumulateur (1) de pression suivant la revendication 1 ou 2, **caractérisé en ce qu'**il est prévu dans la partie (4) inférieure sur la paroi extérieure de la cuve (2), notamment sur sa face (11) intérieure, au moins en partie un dispositif (12) isolant.

4. Accumulateur (1) de pression suivant la revendication 3, **caractérisé en ce que** le dispositif (12) isolant est constitué pour recevoir un fluide (m) isolant qui sert d'accumulateur de chaleur.

5. Accumulateur (1) de pression suivant la revendication 3 ou 4, **caractérisé en ce que** le dispositif (12) isolant comporte une cloison (16) qui est disposée dans la partie (4) inférieure de la cuve (2) et par laquelle il est formé un espace (14) extérieur entre la paroi extérieure et la cloison (16).

6. Accumulateur (1) de pression suivant la revendication 5, **caractérisé en ce que** l'espace (14) extérieur communique avec le reste de l'intérieur de la cuve (2) par une ouverture (7) à son extrémité supérieure.

7. Accumulateur (1) de pression suivant la revendication 5 ou 6, **caractérisé en ce que** le volume de l'espace (14) extérieur représente environ de 15 à 25 %, et notamment 18 %, du volume total de la cuve (2).

8. Accumulateur (1) de pression suivant l'une des revendications précédentes, **caractérisé en ce que** le volume de la partie (3) supérieure représente environ de 10 à 30 %, et notamment 18 %, du volume total de la cuve (2).

9. Accumulateur (1) de pression suivant l'une des revendications précédentes, **caractérisé en ce que** le dispositif (8) de chauffage est disposé sensiblement dans un plan qui est perpendiculaire à l'axe (3) médian.

10. Accumulateur (1) de pression suivant l'une des revendications précédentes, **caractérisé en ce qu'**il est conçu pour une pression de fonctionnement de plus de 50 bars, notamment pour une pression de fonctionnement de 150 bars.

11. Procédé de préparation d'un fluide (f) sous pression dans un accumulateur (1) de pression pour l'envoyer à des éléments (27, 20b) d'une installation qui se trouvent en aval, dans lequel on chauffe le fluide (f) par apport de chaleur dans la partie (3) supérieure de l'accumulateur (1) de pression,
**caractérisé en ce que**, pendant le fonctionnement en réserve, on évapore partiellement le fluide (f) dans l'accumulateur (1) de pression empli seulement en partie pour la production et le maintien de la pression et on produit un matelas (p) de vapeur.

12. Procédé suivant la revendication 11, **caractérisé en ce que** l'apport de chaleur est tel qu'il se raccorde au matelas (p) de vapeur une zone de fluide chaud ayant du fluide (hf) chaud et à celle-ci à nouveau une zone de fluide froid ayant du fluide (kf) froid, le volume de la zone de fluide chaud étant par rapport à celui du matelas (p) de vapeur dans un rapport d'environ 2:1 et les deux volumes forment à peu près de 10 % à 30 %, et notamment 18 %, du volume de l'accumulateur (1) de pression.

13. Procédé suivant la revendication 11 ou 12, **caractérisé en ce que** la quantité de fluide (hf) chaud correspond à peu près à la quantité de fluide nécessaire dont ont besoin les éléments (27, 20b) en aval.

14. Procédé suivant l'une des revendications 11 à 13, **caractérisé en ce que**, lorsque l'on envoie le fluide (f) plus loin, le niveau (h) de remplissage dans l'accumulateur (1) de pression s'abaisse et **en ce que** le fluide (hf) chaud et la vapeur du matelas (p) de vapeur dans la partie (4) inférieure sont refroidis en cédant de la chaleur à un dispositif (12) isolant, de manière à supprimer la pression dans l'accumulateur (1) de pression.

15. Procédé suivant l'une des revendications 11 à 14, **caractérisé en ce qu'**on mélange au fluide (f) un gaz non condensable.

16. Procédé suivant l'une des revendications 11 à 15, **caractérisé en ce que** l'on envoie le fluide (f) à l'entraînement (27) d'une barre de commande d'un réacteur d'une centrale nucléaire à eau bouillante.

17. Procédé suivant l'une des revendications 11 à 15, **caractérisé en ce que** l'on envoie le fluide (f) à un système de refroidissement d'urgence d'une centrale nucléaire à eau sous pression en tant qu'eau de refroidissement d'urgence.

18. Utilisation de l'accumulateur (1) de pression suivant l'une des revendications 1 à 10 comme cuve (32) d'arrêt rapide d'une centrale nucléaire à eau bouillante.

19. Utilisation de l'accumulateur (1) de pression suivant l'une des revendications 1 à 10 comme accumulateur (44) d'eau de refroidissement d'urgence dans une centrale nucléaire à eau sous pression.
